# EUROPEAN PATENT APPLICATION

(11) **EP 3 632 803 A1**
(43) Date of publication of application: **08.04.2020**
(21) Application number: 18832142.6
(22) Date of filing: 30.05.2018
(51) Int. Cl.: B64F 1/36, B64C 39/02

(54) **FLYING BODY MANAGEMENT SYSTEM**

(30) Priority: 10.07.2017 JP 2017134711
(71) Applicant: NTT Docomo, Inc., Tokyo 100-6150 (JP)
(72) Inventor: FUJITA, Syunsuke, Tokyo 100-6150 (JP); KAWAGOSHI, Naoki, Tokyo 100-6150 (JP); TERAOKA, Atsushi, Tokyo 100-6150 (JP); EBARA, Hidetoshi, Tokyo 100-6150 (JP); NAKAMURA, Yukiko, Tokyo 100-6150 (JP)
(74) Representative: Viering, Jentschura & Partner mbB Patent- und Rechtsanwälte
(86) International application number: PCT/JP2018/020789
(87) International publication number: WO 2019/012836

(57) **Abstract**

Prohibition of penetration of a flying body such as a drone into a predetermined place is performed reliably and appropriately. A management server 10 is a flying body management system that manages a drone 20 that is a flying body. The management server 10 includes a state information acquiring unit 11 that acquires state information representing a state at a time of flying of the drone 20 and an area setting unit 12 that sets a buffer area that is an area relating to control of the drone 20 in accordance with the state information acquired by the state information acquiring unit 11.

## Description

### Technical Field

The present invention relates to a flying body management system managing a flying body such as a drone.

### Background Art

For example, as illustrated in Patent Literature 1, conventionally, it has been proposed to perform movement control in accordance with a deviation between a position of a moving body and a scheduled movement path for a moving body such as an automobile, a ship, or an airplane.

### Citation List

### Patent Literature

[Patent Literature 1] Japanese Unexamined Patent Publication No. H5-19854

### Summary of Invention

### Technical Problem

In recent years, drones that are flying bodies have been used for various purposes. At the time of flying drones, it is conceivable to set a prohibition area prohibiting flight of drones due to safety or the like (a flying prohibited zone). A prohibited area, for example, may be set as a predetermined area having the position of a major facility as its center, more specifically, a circular area having a radius of 100 m. In order not to allow a drone to penetrate into a prohibited area, a countermeasure of providing a buffer area in which change of the direction or the like of a drone can be performed immediately outside the prohibited area may be conceived. Alternatively, a countermeasure of performing the control described in Patent Literature 1 may be considered.

However, when simply performing such countermeasures, the following problems may occur. For example, when a narrow buffer area is set, it may be difficult to reliably prevent penetration of a drone into a prohibited area. On the other hand, when a wide buffer area is set, areas in which drones can fly may become restricted, and there is concern that it may become difficult to fly drones efficiently. In addition, also in the control described in Patent Literature 1, it is difficult to effectively prevent a drone from penetrating into a prohibited area.

The present invention is realized with the description presented above taken into account, and an object thereof is to provide a flying body management system capable of reliably and appropriately performing prohibition of penetration and the like of flying bodies such as drones into predetermined places.

### Solution to Problem

In order to achieve the object described above, a flying body management system according to one embodiment of the present invention is a flying body management system managing a flying body including a state information acquiring unit configured to acquire state information representing a state at a time of flying of the flying body and an area setting unit configured to set an area relating to control of the flying body in accordance with the state information acquired by the state information acquiring unit.

In the flying body management system according to one embodiment of the present invention, an area relating to control of a flying body is set in accordance with state information. Accordingly, the area can be set to an appropriate size in accordance with a state at a time of flying of a flying body. In accordance with such setting, according to the flying body management system according to one embodiment of the present invention, prohibition of penetration and the like of a flying body such as a drone into a predetermined place can be performed reliably and appropriately.

### Advantageous Effects of Invention

According to one embodiment of the present invention, an area relating to control of flying bodies can be set to an appropriate size in accordance with a state at the time of flying of a flying body, and prohibition of penetration and the like of flying bodies such as drones into predetermined places can be performed reliably and appropriately.

### Brief Description of Drawings

Fig. 1 is a diagram illustrating the configuration of a management server that is a flying body management system according to an embodiment of the present invention.
Fig. 2 is a flowchart illustrating a process executed by a management server that is a flying body management system according to an embodiment of the present invention.
Fig. 3 is a diagram illustrating the hardware configuration of a management server that is a flying body management system according to an embodiment of the present invention.

### Description of Embodiments

Hereinafter, a flying body management system according to an embodiment of the present invention will be described in detail with reference to the drawings. In addition, in description of the drawings, the same reference signs will be assigned to the same components, and duplicate description will be omitted.

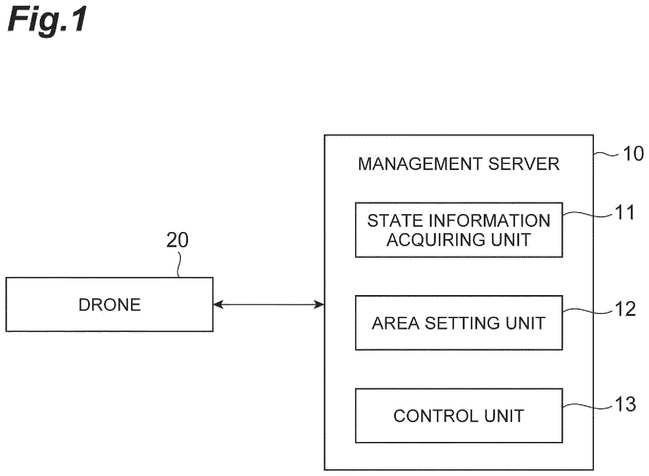

Fig. 1 illustrates a management server 10 that is a flying body management system according to this embodiment. The management server 10 is a device (system) that manages a drone 20. More specifically, the management server 10 monitors and controls a flying position of the drone 20.

The drone 20 is a flying body that is a management target of the management server 10. The drone 20 has a device configuration similar to that of a conventional drone. The drone 20 can perform radio communication and can transmit/receive information to/from the management server 10 through radio communication. For example, the drone 20 can perform mobile communication. In addition, the drone 20 may be configured to perform radio communication other than mobile communication, for example, radio communication using a wireless local area network (LAN). When transmission/reception of information between the drone 20 and the management server 10 is performed, authentication of the drone 20 may be performed by the management server 10. The drone 20 is controlled by the management server 10. For example, the drone 20 may receive information of a flight plan from the management server 10 and perform flight along a flight route (flight path).

The information of a flight plan, for example, includes information (for example, a latitude, longitude, and altitude) representing positions that form a flying route of the drone 20 and a reference value (will be described later more specifically) that is an assumed state of the drone at each of the positions. The reference values are calculated or set on the basis of a flight route and the like of the drone 20. The reference value may be calculated or set at a position for every predetermined interval or may be calculated or set finely only for a specific area. The flight plan may be generated by a user who is a manager of the drone 20 or may be generated by the management server 10. In the generation of the flight plan, a prohibited area and a buffer area to be described later and adjustment for flight plans of other drones 20 are also considered. The information of the flight plan is stored in the management server 10 when the drone files.

The drone 20 detects a state at a time of flying of the drone 20 and transmits (notifies) state information (parameters) representing a detected state to the management server 10. The detection of the state of the drone 20 is performed by a device that detects a state such as a sensor included in the drone 20. The drone 20 may detect the state of the drone 20 regularly (for example, every several seconds or every several minutes) and transmit state information to the management server 10 at each of these times or may transmit state information to the management server 10 when a specific event occurs (for example, in a case in which there is a large variation in the state of the drone 20). Description regarding the state information will be presented later.

In addition, the drone 20 has a positioning function of the drone 20 such as a global positioning system (GPS) positioning function and acquires information (for example, a latitude, longitude, and altitude) representing the position of the drone 20. The drone 20 regularly (for example, for every several seconds or several minutes) acquires the information representing the position of the drone 20 and transmits the acquired information to the management server 10. In addition, as will be described later, the information representing the position of the drone 20 may be included in the state information. In addition, the drone 20 may also transmit the information representing the position of the drone 20 and the state information to the management server 10 at the same time. Furthermore, in a case in which the information representing the position of the drone 20 and the state information are not transmitted in real time or the like, the drone 20 may transmit information representing a time at which such information is acquired to the management server 10 together with such information.

The drone 20 is configured to include a body frame, a battery, a communicator, a propeller, a motor, an electronic speed controller (ESC), a flight controller, and the like. The drone 20 may be configured by mounting a communicator having a radio communication function in a ready-made drone having no radio communication function through post-installation. In addition, the drone 20 may autonomously fly as described above or may fly through a remote operation.

Subsequently, the function of the management server 10 according to this embodiment will be described. As illustrated in Fig. 1, the management server 10 is configured to include a state information acquiring unit 11, an area setting unit 12, and a control unit 13.

The state information acquiring unit 11 is a functional unit that acquires state information of the drone 20. The state information acquiring unit 11 receives and acquires state information transmitted from the drone 20. Alternatively, the state information acquiring unit 11 receives information used for calculating state information from the drone 20 and acquires state information by calculating the state information from the received information. For example, the state information acquiring unit 11 acquires the following state information.

The state information acquiring unit 11 acquires information representing a movement state of the drone 20 as state information. As the movement state of the drone 20, for example, there are a movement speed and a movement direction (traveling direction) of the drone 20. For example, the state information acquiring unit 11 receives information representing positions of a time-series of the drone 20 from the drone 20, for example, information representing a latitude, longitude, and altitude of the drone 20 and calculates a movement speed and a movement direction from the received information. The calculation of a movement speed and a movement direction from positions of a time series can be performed using a conventional method.

In this case, the drone 20 acquires information representing the position of the drone 20. Alternatively, the drone 20, for example, may detect a movement speed and a movement direction using a speed sensor and the like and transmit detection information to the management server 10 as state information.

Alternatively, the state information acquiring unit 11 may acquire information relating to other drones 20 located near the drone 20 as state information. There are cases in which, when a drone 20 flies, a plurality of drones 20 are linked therewith (accompanying). In such cases, a plurality of other drones 20 are located near the drone 20. As information relating to the other drones 20 located near the drone 20, for example, there is the number of other drones 20 located near the drone 20, particularly, the number of drones 2 that are linked with the drone 20 and the like. In addition, being near the drone 20, for example, may be being in a range of a distance at which drones 20 can be regarded to be linked with each other and in a range of a distance of about several meters from the drone 20.

In this case, the drone 20 has a function of detecting other drones 20 located nearby. For example, the drone 20 regularly may transmit a signal, for example, according to near field communication such as Bluetooth (a registered trademark). At this time, a range which a signal reaches is set to be only nearby. When a signal from another drone 20 can be received, the drone 20 recognizes that another drone 20 is present nearby. A signal according to near field communication may be configured to identify a linked drone using a signal that can be used for identifying a linked drone. The drone 20 transmits the number of detected other drones 20 to the management server 10. In addition, the drone 20 may detect other drones 20 located nearby using a method other than that described above. The state information acquiring unit 11 receives and acquires information transmitted from the drone 20 as state information.

Alternatively, the state information acquiring unit 11 may acquire information relating to an available flying time of the drone 20 as state information. The available flying time of the drone 20 corresponds to the remaining amount of the battery (battery remaining amount) of the drone 20. Accordingly, as the information relating to the available flying time of the drone 20, for example, there is information representing the remaining amount of the battery of the drone 20. The drone 20 detects the remaining amount of a battery included in the drone 20 and transmits information representing the remaining amount to the management server 10. The state information acquiring unit 11 receives and acquires the information transmitted from the drone 20 as state information.

The state information acquiring unit 11 acquires information representing a communication state of the drone 20 as state information. As the information representing the communication state of the drone 20, for example, there is the number of base stations of a mobile communication network searched by the drone 20. The drone 20 detects the number of base stations searched by the drone 20 and, more specifically, for example, detects the number of base stations from which transmitted pilot signals have been received and transmits the detected number to the management server 10. The state information acquiring unit 11 receives and acquires information transmitted from the drone 20 as state information.

In addition, the state information acquiring unit 11 receives and acquires information representing the position of the drone 20 from the drone 20. The state information acquiring unit 11 outputs the acquired state information described above and the information representing the position of the drone 20 to the area setting unit 12. In addition, in a case in which the information representing the position of the drone 20 is used for controlling the drone, the state information acquiring unit 11 outputs the acquired information to the control unit 13.

The area setting unit 12 is a functional unit that sets an area relating to control of the drone 20 in accordance with state information acquired by the state information acquiring unit 11. Here, an area relating to the control of the drone 20 will be described.

At the time of flight of the drone 20, a prohibited area that is a geographical area in which flight of a drone is prohibited due to safety and the like is set. The prohibited area, for example, may be a predetermined area having the position of a major facility as its center and more particularly, is a circular area having a radius of 100 m. A prohibited area is set in advance by a user who is a manager or the like of the drone 20. The area setting unit 12 stores map data including a prohibited area in advance.

In order not to allow the drone 20 to penetrate into a prohibited area, a buffer area in which a direction change and the like of the drone is performed is disposed immediately outside of the prohibited area. An area relating to control of the drone 20, which is set by the area setting unit 12, is a buffer area. For example, the buffer area is a circular area having the same center as that of the prohibited area. The area setting unit 12 sets a size of the buffer area, more specifically, a size (length) of a radius outside the buffer area. In addition, a size of a radius inside the buffer area is set to the same size as the radius of the prohibited area.

Furthermore, a default buffer area having a size set in advance may be set in advance. In such a case, the buffer area is updated by the area setting unit 12 for each drone 20. A flight route of the drone 20 described above is set to avoid the prohibited area and the buffer area.

As will be described later, the buffer area is set to be small in a case in which there is a low risk of the drone 20 penetrating into a prohibited area such as a case in which the drone 20 is easy to control and is set to be large in a case in which there is a high risk of the drone 20 penetrating into the prohibited area such as a case in which the drone 20 is difficult to control. In other words, the buffer area is set in accordance with stability during a flight of the drone 20 (in other words, risks affecting rapid responses). In addition, the buffer area may be set on the basis of a difference between specific state information and a reference value that is an assumed state of the drone. More specifically, the area setting unit 12 may receive an input of information from the state information acquiring unit 11 and set the size of a buffer that is a size of a radius outside the buffer area as below on the basis of the input information.

The area setting unit 12 sets the size of the buffer as below on the basis of a movement state of the drone 20. The area setting unit 12 reads a reference value of the movement speed at the position of the drone 20 represented in information input from the state information acquiring unit 11. The reference value of the movement speed is a predicted value or a setting value of the movement speed for each position in a flight plan. The area setting unit 12 calculates a difference between the movement speed of the drone 20 represented by the state information input from the state information acquiring unit 11 and the reference value of the movement speed at the position of the drone 20. For example, a value acquired by subtracting the reference value from the movement speed of the drone 20 represented by the state information may be calculated as the difference. The area setting unit 12 sets the size of the buffer such that the size of the buffer becomes larger as the difference becomes larger.

The reason for this is that, when the movement speed is higher, it becomes more difficult to control the drone 20, and a risk of the drone 20 penetrating into the prohibited area is assumed to become higher. For example, the area setting unit 12 sets the size of the buffer to a buffer amount A in a case in which the difference is lower than 10 km/h, to a buffer amount B in a case in which the difference is equal to or higher than 10 km/h and lower than 20 km/h, to a buffer amount C in a case in which the difference is equal to or higher than 20 km/h and lower than 40 km/h, and to a buffer amount D in a case in which the difference is equal to or higher than 40 km/h. Buffer amount A < buffer amount B < buffer amount C < buffer amount D is satisfied herein.

In addition, instead of control based on a difference as described above or in addition to this control, control based only on the movement speed may be performed. For example, the movement speed of the drone 20 is compared with a threshold set in advance, and the size of the buffer may be set on the basis of a result of the comparison.

In addition, in a case in which the movement direction of the drone 20 represented by the state information input from the state information acquiring unit 11 is toward the prohibited area, the area setting unit 12 sets the size of the buffer such that the size of the buffer increases. The reason for this is that it is assumed that a risk of the drone 20 penetrating into the prohibited area becomes high when the drone 20 flies toward the prohibited area. For example, when a prohibited area is present within an angle, which has the movement direction as its center, set in advance from the position of the drone 20, the area setting unit 12 sets the size of the buffer to be larger than a normal size of the buffer for the prohibited area.

The area setting unit 12 sets the size of the buffer as below on the basis of information relating to other drones 20 located near the drone 20. The area setting unit 12 sets the size of the buffer such that the size of the buffer increases as the number of other drones 20 located nearby, which are represented by the state information input from the state information acquiring unit 11, becomes larger. The reason for this is that, as the number of linked drones 20 increases, it becomes more difficult to control the drone 20, and the risk at the time of controlling the drone 20 is assumed to be higher. For example, when the number of drones 20 exceeds a threshold set in advance, the area setting unit 12 sets the size of the buffer to be larger than the normal size of the buffer.

The area setting unit 12 sets the size of the buffer as below on the basis of information relating to an available flying time of the drone 20. The area setting unit 12 sets the size of the buffer such that the size of the buffer increases as the remaining amount of the battery of the drone 20, which is represented by the state information input from the state information acquiring unit 11, is smaller. The reason for this is that, as the remaining amount of the battery is smaller, there is a risk in the continuation of the flight of the drone 20, and a risk at the time of controlling the drone 20 is assumed to increase. For example, the area setting unit 12 sets the size of the buffer to be larger than the normal size of the buffer when the remaining amount of the battery is smaller than a threshold set in advance.

The area setting unit 12 sets the size of the buffer as below on the basis of information representing a communication state of the drone 20. The area setting unit 12 sets the size of the buffer such that the size of the buffer increases as the number of base stations, which are searched by the drone 20, represented by the state information input from the state information acquiring unit 11 is smaller. The reason for this is that, when the number of base stations which are searched by the drone 20 is smaller, a risk of communication between the drone 20 and the management server 10 being disconnected (for example, a risk of radio waves enabling communication being shielded by an obstacle and the like, a risk of a failure of a handover process, and the like) is higher, and a risk of being unable to control the drone 20 is assumed to be high.

The area setting unit 12 reads a reference value of the number of searched base stations at the position of the drone 20 that is represented by information input from the state information acquiring unit 11. The reference value of the number of searched base stations is, for each position, the number of base stations predicted to be searched at the position. The reference value of the number of searched base stations is calculated on the basis of the positions of the base stations, intensities of radio waves transmitted from the base stations, and the like. The area setting unit 12 calculates a difference between the number of searched base stations represented by the state information input from the state information acquiring unit 11 and the reference value of the number of searched base stations at the position of the drone 20. For example, a value acquired by subtracting the number of searched base stations represented by the state information from the reference value is calculated as the difference.

In a case in which the number of searched base stations is smaller than the reference value, the area setting unit 12 sets the size of the buffer such that the size of the buffer increases as the difference becomes larger. For example, the area setting unit 12 sets a buffer amount A in a case in which the difference is equal to or smaller than "1", sets a buffer amount B in a case in which the difference is "2" or "3", and sets a buffer amount C in a case in which the difference is equal to or larger than "4". Here, the buffer amount A < the buffer amount B < the buffer amount C. In addition, in a case in which the number of searched base stations (not the difference) is equal to or smaller than a threshold (for example, "1") set in advance, the area setting unit 12 sets a buffer amount D that is larger than the buffer amount C. The reason for this is that there is a risk of being unable to perform control due to disconnection of communication between the drone 20 and the management server 10 in a case in which the number of searched base stations is equal to or smaller than the threshold.

In the setting described above, although the setting has been described for each type of state information, in a case in which a plurality of pieces of state information are used, the size of the buffer may be set in accordance with a combination thereof. For example, the size of the buffer may be set as an average value of amounts of buffers thereof, a maximum value of the amounts of buffers, or the like. The area setting unit 12 outputs information representing the set size of the buffer to the control unit 13.

The control unit 13 is a functional unit that controls the drone 20 on the basis of a buffer area set by the area setting unit 12. More specifically, the control unit 13 controls the drone 20 as below.

The control unit 13 receives an input of information representing the size of the buffer from the area setting unit 12. The control unit 13 determines whether or not the flight route of the drone 20 passes through the set buffer area by referring to the information of the flight plan. In other words, the control unit 13 determines whether there is no problem in the flight route of the current time point. In a case in which it is determined that the flight route of the drone 20 passes through the set buffer area, in other words, there is a problem in the flight route of the current time point, the control unit 13 sets (generates) a new flight route for the drone 20. A new flight route is set such that the prohibited area and the buffer area are avoided. The setting of a new flight route can be performed using a conventional method. The control unit 13 transmits information of a flight plan including the new flight route to the drone 20 and performs control such that the drone 20 flies along the new flight route.

In addition, the setting of a new flight route may be performed in a case other than a case in which it is determined that there is a problem in the flight route. For example, also in a case in which the buffer area is narrowed, and a range in which the drone 20 can fly is widened, the setting of a new flight route may be performed such that a more efficient flight can be performed.

In addition, in a case in which the control unit 13 monitors the position of the drone 20, and the drone 20 enters the buffer area, the control unit 13 may perform control such that the drone 20 does not penetrate into the prohibited area by transmitting a control signal to the drone 20. As the control, for example, the control unit 13 performs control for performing a flight direction change and a landing operation. In this way, the buffer area may be an area for which control for the drone 20 is performed.

The control causing the drone 20 not to penetrate into the prohibited area may be performed by using autonomous control based on the position of the drone 20. In such a case, the control unit 13 transmits information representing a set buffer area to the drone 20 such that the drone 20 can recognize the buffer area. The function of the management server 10 according to this embodiment has been described as above.

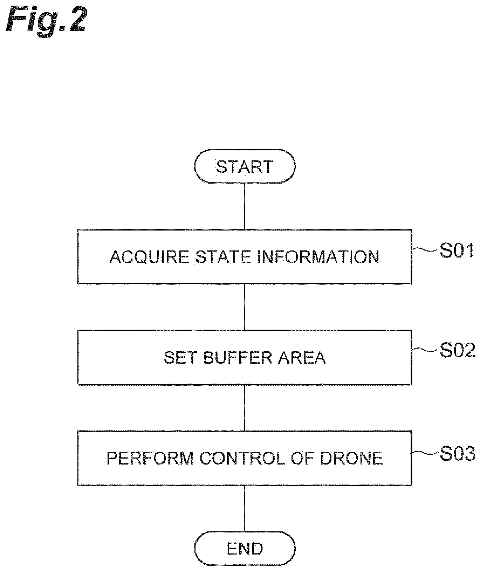

Subsequently, a process executed by the management server 10 (an operation method performed by the management server 10) according to this embodiment will be described with reference to a flowchart illustrated in Fig. 2. In this process, first, the state information of the drone 20 is acquired by the state information acquiring unit 11 receiving it from the drone 20 or the like (S01). Subsequently, a buffer area is set by the area setting unit 12 in accordance with the state information (S02). Subsequently, control for the drone 20 is performed on the basis of the set buffer area by the control unit 13 (S03). The control is control causing the drone 20 not to penetrate into the prohibited area. For example, the control is control of causing the drone 20 to fly along a flight route by setting a new flight route or control of causing the drone 20 that has penetrated into the buffer area to perform a flight direction change and a landing operation. The process executed by the management server 10 according to this embodiment has been described as above.

In this embodiment, a buffer area that is an area relating to the control of the drone 20 is set in accordance with the state information. Accordingly, the buffer area can be set to an appropriate size in accordance with the state at a time of flying of the drone 20. In accordance with this setting, according to this embodiment, prohibition of the penetration of the drone 20 into the prohibited area and the like can be performed reliably and appropriately.

In addition, each piece of the information described above may be used as the state information. By using such information, a buffer area can be appropriately set. In addition, in addition to the information described above, any information may be used as the state information as long as the information represents the state at a time of flying of the drone 20.

In addition, as in this embodiment, the management server 10 may be configured to include the control unit 13. By employing this configuration, the drone 20 can be controlled appropriately and reliably. However, the control of the drone 20 may be performed using a unit other than the management server 10. In such a case, the management server 10 outputs information representing the buffer area set by the area setting unit 12 to a subject body controlling the drone 20.

In addition, although a management target of the management server 10 according to this embodiment is the drone 20, a flight body other than the drone may be the management target. In addition, although the buffer area that is an area relating to the control of this embodiment is a circular area, the shape of the area relating to the control may be an arbitrary shape. Furthermore, the area relating to the control may be set to include an altitude. In other words, the area relating to the control may be three-dimensionally set.

In addition, a part of the function included in the management server 10 according to this embodiment may be included in the drone 20. In other words, the drone 20 may be included in a flight body management system according to one embodiment of the present invention. In addition, all the functions included in the management server 10 according to this embodiment may be included in the drone 20. In other words, the drone 20 may be a flight body management system according to one embodiment of the present invention.

Each block diagram used for description of the embodiment described above illustrates blocks in units of functions. Such functional blocks (component units) are realized by an arbitrary combination of hardware and/or software. In addition, a means for realizing each functional block is not particularly limited. In other words, each functional block may be realized by one device that is combined physically and/or logically or a plurality of devices by directly and/or indirectly (for example, using a wire and/or wirelessly) connecting two or more devices separated physically and/or logically.

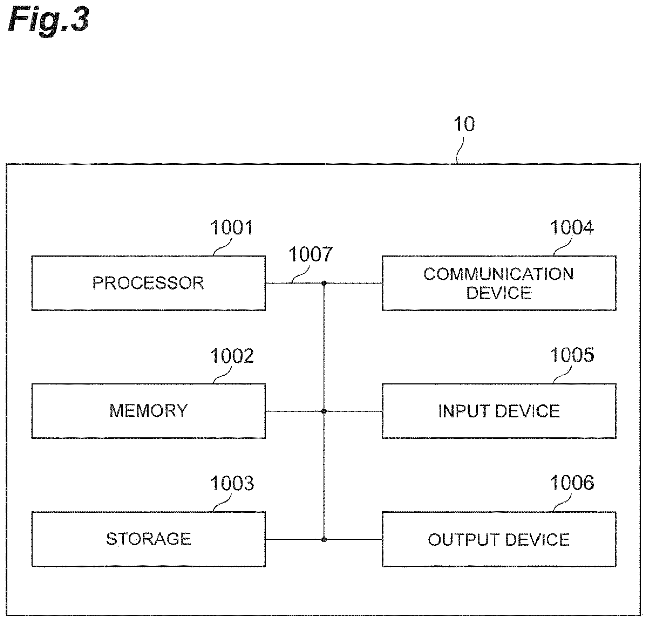

For example, the management server 10 according to one embodiment of the present invention may function as a computer that performs the process of the management server 10 according to this embodiment. Fig. 3 is a diagram illustrating one example of the hardware configuration of the management server 10 according to this embodiment. The management server 10 described above, physically, may be configured as a computer device including a processor 1001, a memory 1002, a storage 1003, a communication device 1004, an input device 1005, an output device 1006, a bus 1007, and the like.

In addition, in the following description, a term "device" may be rephrased with a circuit, a device, a unit, or the like. The hardware configuration of the management server 10 may be configured to include one or a plurality of devices illustrated in the drawing and may be configured without including some devices.

Each function of the management server 10 is realized as the processor 1001 performs an arithmetic operation by causing predetermined software (a program) to be read onto hardware such as the processor 1001, the memory 1002, and the like and controls communication using the communication device 1004 and data reading and/or data writing using the memory 1002 and the storage 1003.

The processor 1001, for example, controls the entire computer by operating an operating system. The processor 1001 may be configured by a central processing unit (CPU) including an interface with peripheral devices, a control device, an arithmetic operation device, a register, and the like. For example, each function of the management server 10 may be realized by the processor 1001.

In addition, the processor 1001 reads a program (a program code), a software module, and data from the storage 1003 and/or the communication device 1004 into the memory 1002 and executes various processes in accordance with these. As the program, a program causing a computer to execute at least some of the operations described in the embodiment described above is used. For example, each function of the management server 10 may be realized by a control program that is stored in the memory 1002 and operated by the processor 1001. Although the various processes described above have been described to be executed by one processor 1001, the processes may be executed simultaneously or sequentially by two or more processors 1001. The processor 1001 may be mounted using one or more chips. In addition, the program may be transmitted from a network through a telecommunication line.

The memory 1002 is a computer-readable recording medium and, for example, may be configured by at least one of a read only memory (ROM), an erasable programmable ROM (EPROM), an electrically erasable programmable ROM (EEPROM), a random access memory (RAM), and the like. The memory 1002 may be referred to as a register, a cache, a main memory (a main storage device), or the like. The memory 1002 can store a program (a program code), a software module, and the like executable for performing the method according to one embodiment of the present invention.

The storage 1003 is a computer-readable recording medium and, for example, may be configured by at least one of an optical disc such as a compact disc ROM (CD-ROM), a hard disk drive, a flexible disk, a magneto-optical disk (for example, a compact disc, a digital versatile disc, or a Blue-ray (registered trademark) disc), a smart card, a flash memory (for example, a card, a stick, or a key drive), a floppy (registered trademark) disk, a magnetic strip, and the like. The storage 1003 may be referred to as an auxiliary storage device. The storage medium described above, for example, may be a database including the memory 1002 and/or a storage 1003, a server, or any other appropriate medium.

The communication device 1004 is hardware (a transmission/reception device) for performing inter-computer communication through a wired and/or wireless network and, for example, may be called also as a network device, a network controller, a network card, a communication module, or the like. For example, each function of the management server 10 described above may be realized by the communication device 1004.

The input device 1005 is an input device (for example, a keyboard, a mouse, a microphone, a switch, buttons, a sensor, or the like) that accepts an input from the outside. The output device 1006 is an output device (for example, a display, a speaker, an LED lamp, or the like) that performs output to the outside. In addition, the input device 1005 and the output device 1006 may have an integrated configuration (for example, a touch panel).

In addition, devices such as the processor 1001, the memory 1002, and the like are connected using a bus 1007 for communication of information. The bus 1007 may be configured as a single bus or buses different between devices.

In addition, the management server 10 may be configured to include hardware such as a microprocessor, a digital signal processor (DSP), an application specific integrated circuit (ASIC), a programmable logic device (PLD), a field programmable gate array (FPGA), or the like, and a part or the whole of each functional block may be realized by the hardware. For example, the processor 1001 may be mounted using at least one of such hardware components.

As above, while this embodiment has been described in detail, it is apparent to a person skilled in the art that this embodiment is not limited to the embodiments described in this specification. This embodiment may be performed as a modified or changed form without departing from the concept and the scope of the present invention set in accordance with the claims. Thus, the description presented in this specification is for the purpose of exemplary description and does not have any limited meaning for this embodiment.

Notification of information is not limited to an aspect/embodiment described in this specification and may be performed using a difference method. For example, the notification of information may be performed using physical layer signaling (for example, downlink control information (DCI), uplink control information (UCI), upper layer signaling (for example, radio resource control (RRC) signaling, medium access control (MAC) signaling, notification information (a master information block (MIB)), a system information block (SIB)), any other signal, or a combination thereof. In addition, the RRC signaling may be referred to as an RRC message and, for example, may be an RRC connection setup message, an RRC connection reconfiguration message, or the like.

Each aspect/embodiment described in this specification may be applied to long term evolution (LTE), LTE-advanced (LTE-A), Super 3G, IMT-advanced, 4G, 5G, future ratio access (FRA), W-CDMA (Registered trademark), GSM (registered trademark), CDMA 2000, ultra mobile broadband (UMB), IEEE 802.11 (Wi-Fi), IEEE 802.16 (WiMAX), IEEE 802.20, ultra-wideband (UWB), Bluetooth (registered trademark), a system using another appropriate system and/or a next generation system extended based on these.

The processing sequence, the sequence, the flowchart, and the like of each aspect/embodiment described in this specification may be changed in order as long as there is no contradiction. For example, in a method described in this specification, elements of various steps are presented in an exemplary order, and the method is not limited to the presented specific order.

The input/output information and the like may be stored in a specific place (for example, a memory) or managed using a management table. The input/output information and the like may be overwritten, updated, or additionally written. The output information and the like may be deleted. The input information and the like may be transmitted to another device.

A judgment may be performed using a value ("0" or "1") represented by one bit, may be performed using a Boolean value (true or false), or may be performed using a comparison between numerical values (for example, a comparison with a predetermined value).

The aspects/embodiments described in this specification may be individually used, used in combination, or be switched therebetween in accordance with execution. In addition, a notification of predetermined information (for example, a notification of being X) is not limited to be performed explicitly and may be performed implicitly (for example, a notification of the predetermined information is not performed).

It is apparent that software, regardless whether it is called software, firmware, middleware, a microcode, a hardware description language, or any other name, be widely interpreted to mean a command, a command set, a code, a code segment, a program code, a program, a subprogram, a software module, an application, a software application, a software package, a routine, a subroutine, an object, an executable file, an execution thread, an order, a function, and the like.

In addition, software, a command, and the like may be transmitted and received via a transmission medium. For example, in a case in which software is transmitted from a website, a server, or any other remote source using wired technologies such as a coaxial cable, an optical fiber cable, a twisted pair, a digital subscriber line (DSL) and the like and/or radio technologies such infrared rays, radio waves, and microwaves, and the like, such wired technologies and/or radio technologies are included in the definition of the transmission medium.

Information, a signal, and the like described in this specification may be represented using any one among other various technologies. For example, data, an instruction, a command, information, a signal, a bit, a symbol, a chip, and the like described over the entire description presented above may be represented using a voltage, a current, radiowaves, a magnetic field or magnetic particles, an optical field or photons, or an arbitrary combination thereof.

In addition, a term described in this specification and/or a term that is necessary for understanding this specification may be substituted with terms having the same meaning or a meaning similar thereto. For example, a channel and/or symbol may be a signal. In addition, a signal may be a message. Furthermore, a component carrier (CC) may be referred also as a carrier frequency, a cell, or the like.

Terms "system" and "network" used in this specification are compatibly used.

In addition, information, a parameter, and the like described in this specification may be represented using absolute values, relative values from predetermined values, or other corresponding information. For example, radio resources may be directed using indices.

A name used for each parameter described above is not limited in any aspect. In addition, numerical equations using such parameters may be different from those that are explicitly disclosed in this specification. Various channels (for example, a PUCCH, a PDCCH, and the like) and information elements (for example, a TPC and the like) can be identified using all the preferred names, and various names assigned to such various channels and information elements are not limited in any aspect.

The base station can house one or a plurality of (for example, three) cells (also called as a sector). In a case in which the base station houses a plurality of cells, the entire coverage area of the base station can be partitioned into a plurality of smaller areas, and, for each of the smaller areas, a communication service may be provided using a base station sub-system (for example, an indoor small base station (a remote radio head (RRH)). A term such as "cell" or "sector" represents a part or the whole of a coverage area of a base station and/or a base station sub-system providing a communication service for this coverage. In addition, terms such as a "base station," an "eNB," and a "sector" may be compatibly used in this specification. The base station may be called using a term such as a fixed station, a NodeB, an eNodeB (eNB), an access point, a femto cell, a small cell, or the like.

A mobile communication terminal may be called as a subscriber station, a radio unit, a subscriber unit, a wireless unit, a remote unit, a mobile device, a wireless device, a wireless communication device, a remote device, a mobile subscriber station, an access terminal, a mobile terminal, a wireless terminal, a remote terminal, a hand set, a user agent, a mobile client, a client, or any other appropriate term by persons skilled in the art.

Terms such as "determining" used in this specification may include various operations of various types. The "determining", for example, may include a case in which judging, calculating, computing, processing, deriving, investigating, looking up (for example, looking up a table, a database, or any other data structure), or ascertaining is regarded as "determining". In addition, "determining" may include a case in which receiving (for example, receiving information), transmitting (for example, transmitting information), input, output, or accessing (for example, accessing data in a memory) is regarded as "determining". Furthermore, "determining" may include a case in which resolving, selecting, choosing, establishing, comparing, or the like is regarded as "determining". In other words, "determining" includes a case in which a certain operation is regarded as "determining".

Terms such as "connected" or "coupled" or all the modifications thereof mean all the kinds of direct or indirect connection or coupling between two or more elements and may include presence of one or more intermediate elements between two elements that are mutually "connected" or "coupled". Coupling or connection between elements may be physical coupling or connection, logical coupling or connection, or a combination thereof. When used in this specification, two elements may be considered as being mutually "connected" or "coupled" by using one or more wires, cables and/or print electric connections and, as several non-limiting and non-comprehensive examples, by using electromagnetic energy such as electromagnetic energy having wavelengths in a radio frequency region, a microwave region, and a light (both visible light and non-visible light) region.

A reference signal may be abbreviated to a reference signal (RS) and may be referred to as a pilot according to applied standards.

Description of "on the basis of used in this specification does not mean "only on the basis of" unless otherwise mentioned. In other words, description of "on the basis of" means both "only on the basis of" and "at least on the basis of".

In this specification, in a case in which names such as "first", "second", and the like is used, referring to each element does not generally limit the amount or the order of such an element. Such names may be used in this specification as a convenient way for distinguishing two or more elements from each other. Accordingly, referring to the first and second elements does not mean that only the two elements are employed therein or the first element precedes the second element in a certain form.

As long as "include", "including", and modifications thereof are used in this specification or the claims, such terms are intended to be inclusive like a term "comprising". In addition, a term "or" used in this specification or the claims is intended to be not an exclusive logical sum.

In this specification, other than a case in which clearly only one device is present in a context or technically, a device includes a plurality of devices. In the entirety of the present disclosure, unless a singularity is represented clearly from the context, it includes a plurality thereof.

### Reference Signs List

10 Management server
11 State information acquiring unit
12 Area setting unit
13 Control unit
1001 Processor
1002 Memory
1003 Storage
1004 Communication device
1005 Input device
1006 Output device
1007 Bus
20 Drone

## Claims

1. A flying body management system managing a flying body, the flying body management system comprising:
a state information acquiring unit configured to acquire state information representing a state at a time of flying of the flying body; and
an area setting unit configured to set an area relating to control of the flying body in accordance with the state information acquired by the state information acquiring unit.

2. The flying body management system according to claim 1, wherein the state information acquiring unit acquires information representing a movement state of the flying body as the state information.

3. The flying body management system according to claim 1 or 2, wherein the state information acquiring unit acquires information relating to other flying bodies located near the flying body as the state information.

4. The flying body management system according to any one of claims 1 to 3, wherein the state information acquiring unit acquires information relating to an available flying time of the flying body as the state information.

5. The flying body management system according to any one of claims 1 to 4,
wherein the flying body is capable of communicating, and
wherein the state information acquiring unit acquires information representing a communication state of the flying body as the state information.

6. The flying body management system according to any one of claims 1 to 5, further comprising a control unit that performs control of the flying body on the basis of the area set by the area setting unit.
